# EUROPÄISCHE PATENTSCHRIFT

(11) **EP 2 430 898 B1**
(45) Veröffentlichungstag und Bekanntmachung des Hinweises auf die Patenterteilung: **05.07.2017**
(21) Anmeldenummer: 11007063.8
(22) Anmeldetag: 31.08.2011
(51) Int. Cl.: A01D 34/73

(54) **Sicherheitskupplung**
Safety coupling
Embrayage de sécurité

(30) Priorität: 15.09.2010 DE 102010045496
(43) Veröffentlichungstag der Anmeldung: 21.03.2012
(73) Patentinhaber: MWS Schneidwerkzeuge GmbH & Co KG, 98574 Schmalkalden / Thüringen (DE)
(72) Erfinder: Tröger, Hartmut, 98574 Schmalkalden (DE); Johannes, Hartmut, 98574 Schmalkalden (DE)

(56) Entgegenhaltungen:
- US-A- 3 028 717
- US-A- 3 050 924
- US-A- 4 413 468
- US-A- 4 771 593

## Beschreibung

Die Erfindung betrifft eine Sicherheitskupplung für einen sichelartig arbeitenden, motorisch angetriebenen Rasenmäher mit einem Schnittkessel an dessen unteren, offenen Rand ein mit der Motorwelle starr verbundenes, d.h. direkt angetriebenes zwei- oder mehrflügeliges Messer umläuft.

Sichelartig arbeitende, motorisch angetriebene Rasenmäher mit Schnittkesseln an deren unteren, offenen Rändern mit der Motorwelle verbundene, d.h. direkt angetriebene, zwei- oder mehrflügelige Messer umlaufen sind im Stand der Technik mehrfach vorbeschrieben.
Derartige Lösungen wurden unter anderem in der US 3 050 924 A, der US 3 028 717 A, der US 4 413 468 A, der US 4 771 593 A, aber auch von der Anmelderin, beispielsweise in der EP 1 181 858 B1, wie auch in der EP 1 474 963 B1 offenbart.
Ein wesentlicher Nachteil der im Stand der Technik vorbeschriebenen Bauformen, mit direkt mit der Motorwelle starr verbundenen Mäh- und Mulchmessern, besteht insbesondere darin, dass die Motorwellen verbogen werden, wenn die am freien Ende der Motorwelle angeordneten Messer extrem hohen Belastung ausgesetzt werden.
Derartige extrem hohe Belastungen treten beim "Einmähen" in eine Wurzel, oder in die Reste eines einbetonierten, grasüberwachsenen Stahlrohres auf, wenn z.B. so in diese eingemäht / "eingehackt" wird, dass das am freien Ende der Motorwelle angeordnete Messer sofort steht, d.h. auch der Motor zum Stillstand gezwungen, so zu sagen "abgewürgt" wird.
Bei einer Motorleistung von 4,4 kW, einer Messergesamtlänge von 530 mm und einer Drehzahl von 3.000 U/min wurden bei derartigen "Crash-Test's", im charakteristischen Kraftangriffspunkt derartiger Extrembelastungen, etwa 2 cm vor dem Messerrand, Belastungen am Messer von ca. 1,45 t ermittelt.
Derartige am Messer angreifende "Crash-Lasten" haben an der Motorwelle ein solch hohes Biegemoment zur Folge, dass es zu einer plastischen Verformung der Motorwelle kommt, bevor die in üblicher Weise bei Rasenmähern im Stand der Technik nahe der Motorwelle angeordneten, und auf Torsionsbeanspruchung bemessenen "Überlastsicherungen", wie z.B. Reibscheiben oder auch "Sollbruchstellen", wie Scherstifte, Scherkeile o.ä., in den Bereich der Grenzlast kommen, dabei die Motorwelle vom Messer trennen und so eine plastische Verformung der Welle vermeiden.
Bei Rasenmähern mit an freien Wellen angeordeneten Sichelmessern, den sogenannten Sichelmähern, treten daher unter den oben geschilderten extremen Belastungen immer Motorschäden durch plastische Verformungen der Motorwellen auf, ohne dass die für den Grenzlastfall im Motor integrierten Sollbruchsicherungen, wie Reibscheiben, Keile, Stifte o.ä. auslösen.
Der "Einschlag" des Mähmessers eines Rasenmähers in einen ortsfesten Gegenstand, wie z. B. eine Wurzel oder einen einbetonierten, grasüberwachsenen Pfostenrest, hat daher zwangsläufig stets hohe Reparatur-und Instandsetzungskosten zur Folge, da neben dem völlig verbogenen Messer, auch die verbogene Motorwelle und oftmals auch die Schwungmassen u.s.w. ersetzt werden müssen, so dass es zwangsläufig zu größeren Ausfallzeiten kommt, da der Rasenmäher zwingend in eine Werkstatt muss.

Zudem ist ein solcher "Einschlag" des Mähmessers auch für den Bediener des Rasenmähers infolge der dabei auftretenden Kräfte nicht ganz ungefährlich.

Der Erfindung liegt daher die Aufgabe zugrunde eine Sicherheitskupplung für einen sichelartig arbeitenden, motorisch angetriebenen Rasenmäher mit einem Schnittkessel zu entwickeln, welche die vorgenannten Nachteile des Standes der Technik beseitigt, eine plastische Verformung der Motorwelle bei "Einschlag" eines Messers in einen ortsfesten Gegenstand vermeidet, dadurch die Unfallgefahr senkt, Motorschäden vermeidet, Ausfallzeiten minimiert, zudem die Ersatzteillagerhaltung und gleichzeitig die Ersatzteilkosten minimiert, die Instandsetzungskosten und gleichzeitig auch die Reparaturzeiten deutlich senkt und dabei gleichzeitig fertigungstechnisch einfach und kostengünstig herstellbar ist.

Erfindungsgemäß wird diese Aufgabe durch eine Sicherheitskupplung für einen sichelartig arbeitenden, motorisch angetriebenen Rasenmäher mit einem Schnittkessel nach den Merkmalen des Hauptanspruches der Erfindung gelöst.
Vorteilhafte Ausführungen, Einzelheiten und Merkmale der Erfindung ergeben sich aus den Unteransprüchen sowie der nachfolgenden Beschreibung des erfindungsgemäßen Ausführungsbeispieles in Verbindung mit fünf Zeichnungen zur erfindungsgemäßen Lösung.

Nachfolgend soll nun die Erfindung an Hand eines Ausführungsbeispieles in Verbindung mit fünf Figuren näher erläutert werden.

Es zeigen dabei:
- Figur 1 :: einen Teilschnitt durch die erfindungsgemäße Anordnung in der Seitenansicht,
- Figur 2 :: einen Teilschnitt durch die erfindungsgemäße Anordnung in der Vorderansicht,
- Figur 3 :: eine Explosionsdarstellung der erfindungsgemäßen Anordnung,
- Figur 4 :: die Explosionsdarstellung der erfindungsgemäßen Anordnung, gemäß Figur 3, mit jeweils mittig geschnittenen Bauteilen,

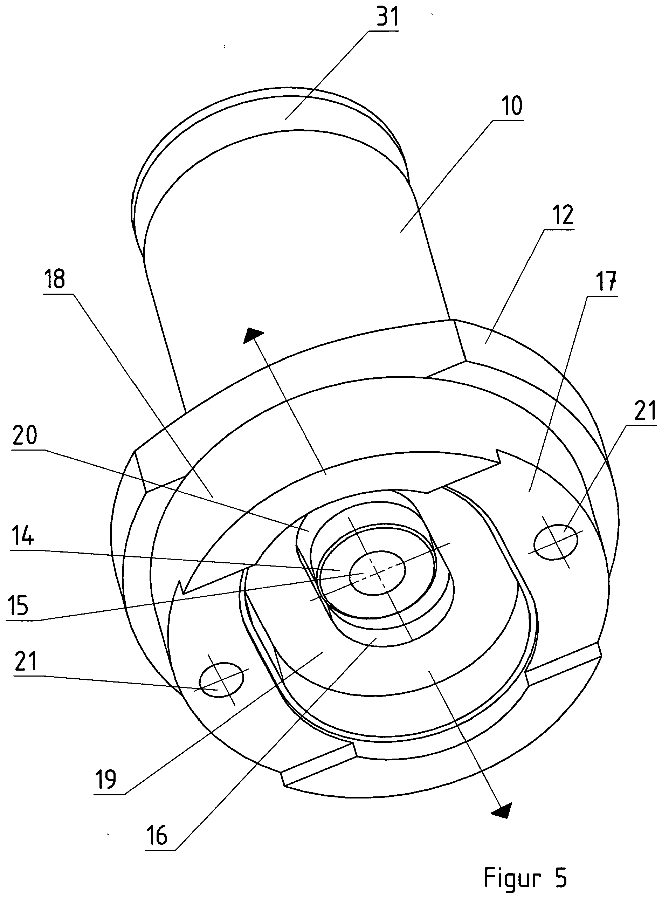

- Figur 5 :: eine räumliche Darstellung einer nicht mit der Motorwelle 5 und nicht mit dem Messer 6 verbundenen erfindungsgemäßen Sicherheitskupplung, mit Blick in die Messeraufnahmenut 17, die Schiebenut 16 und auf den in der Schiebenut 16 angeordneten Zentrierzylinder 14.

Die fünf Darstellungen des erfindungsgemäßen Ausführungsbeispieles zeigen eine Sicherheitskupplung für einen Rasenmäher, welcher sichelartig arbeitet und von einem Motor 1 angetrieben wird, mit einem Schnittkessel 2 an dessen unteren, offenen Kesselrand 3, dem Kesselboden 4 gegenüberliegend, mit der Motorwelle 5 starr verbundene zwei- oder mehrflügelige Messer 6 umlaufen.
Erfindungsgemäß ist zentrisch zur Motorwelle 5 am Kesselboden 4, ein in den Schnittkessel 2 hineinragender Fangringträger 7 mit einem Fangring 8 angeordnet. Die Motorwelle 5 ist dabei in einer Wellenbohrung 9 eines Scherkopfhalters 10 drehfest angeordnet ist, wobei erfindungswesentlich der Scherkopfhalter 10 durch den Fangringträger 7 hindurch ragt und den Fangring 8 mit einem am Scherkopfhalters 10 angeordneten Scherkopf 12 überragt, wobei im Bereich des Fangringes 8 am Scherkopfhalter 10 ein Anlaufring 11 angeordnet ist, welcher bei im Betriebszustand rotierende Motorwelle 5 berührungslos, d.h. frei im Fangring 8 umläuft.

Kennzeichnend ist weiterhin, dass an dem unterhalb des Anlaufringes 11 am Scherkopfhalter 10 angeordneten Scherkopf 12 zwei einander diagonal gegenüberliegende durch den Scherkopf 12 hindurch gehende Scherbohrungen 13 angeordnet sind, wobei stirnseitig, mittig am Scherkopf 12 ein Zentrierzylinder 14 angeordnet ist, in dem mittig eine zentrisch in die Wellenbohrung 9 mündende, in der Achse der Motorwelle 5 liegende Befestigungsbohrung 15 angeordnet ist.
Kennzeichnend ist auch, dass dem Scherkopf 12 des Scherkopfhalters 10 benachbart ein Schiebestück 18 angeordnet ist, welches scherkopfseitig mit einer, mit dem Zentrierzylinder 14 in Wirkverbindung tretenden, Schiebenut 16, und auf der gegenüberliegenden Seite, mit einer rechwinklig zur Schiebenut 16 verlaufenden Messeraufnahmenut 17 versehen ist, wobei im Schiebestück 18, der Messeraufnahmenut 17 benachbart, ein zylinderförmiger Federraum 19 angeordnet ist.
Erfindungsgemäß ist auch, dass das Schiebestück 18 entlang der Schiebenut 16 am Zentrierzylinder 14 des Scherkopfes 12 vom Scherkopfhalter 10 längsverschiebbar und zugleich verdrehbar angeordnet ist, und zwischen dem Schiebestück 18 und dem Scherkopf 12 des Scherkopfhalters 10 ein Gleitelement 20 angeordnet ist.
Erfindungswesentlich ist weiterhin, dass im Schiebestück 18 achssymmetrisch, beidseitig der Schiebenut 16, mittig zu deren Längsausdehnung, und in der radialen Lage zu den Scherbohrungen 13 im Scherkopf 12 fluchtend, Gewindebohrungen 21 angeordnet sind, welche gegenüber den Scherbohrungen 13 einen größeren Durchmesser aufweisen.
Kennzeichnend ist auch, dass mittig im Messer 6 eine Durchgangsbohrung 23, sowie symmetrisch beidseitig der Durchgangsbohrung 23, jeweils zu den Gewindebohrungen 21 und damit auch zu den Scherbohrungen 13 im Scherkopf 12 fluchtend, den Gewindebohrungen 21 zugeordnete Durchsteckbohrungen, die Messerbefestigungsbohrungen 22 angeordnet sind. Erfindungswesentlich ist auch, dass das Messer 6 formschlüssig in der Messeraufnahmenut 17 angeordnet ist, und mittels der in den Messerbefestigungsbohrungen 22 und den Gewindebohrungen 21 des Schiebestückes 18 verschraubten Scherschrauben 24 am Schiebestück 18 befestigt ist.
Kennzeichnend ist weiterhin, dass an den Scherschrauben 24 den Gewindebereich überragende Scherbolzen 25 derart angeordnet sind, dass diese bei am Schiebestückes 18 verschraubten Scherschrauben 24 das Schiebestück 18 überragen.
Erfindungswesentlich ist dabei, dass die Schiebenut 16 des Schiebestückes 18 derart auf den Zentrierzylinder 14 des Scherkopfes 12 vom Scherkopfhalter 10 aufgesetzt wird, dass die das Schiebestück 18 überragenden, an den Scherschrauben 24 endseitig angeordneten Scherbolzen 25 in die Scherbohrungen 13 des Scherkopfhalters 10 hineinragen und so bis zu der vom jeweiligen Scherbolzen vorgegebenen Scherkraft eine formschlüssige Kraftübertragung gewährleisten.
Wesentlich ist in diesem Zusammenhang, dass zwischen den Anlageflächen von Schiebestück 18 und Scherkopf 12 ein Gleitelement 20 angeordnet ist.
Vorteilhaft ist, wenn zwischen jeder der Scherschrauben 24 und dem Messer 6 Sicherungsringe 32 angeordnet sind um bei den dynamischen Beanspruchungen des Messers einen zuverlässigen Sitz der Scherschrauben 24 zu gewährleisten.
Kennzeichnend ist weiterhin, dass im Federraum 19 des Schiebestückes 18 zwischen der Schiebenut 16 und dem mit dem Schiebestück 18 verbundenen Messer 6 eine im Bereich der Schiebenut 16 am Schiebestück 18 anliegende Tellerfeder 26, und dieser messerseitig benachbart eine Zentrierplatte 27 angeordnet ist, wobei mittels einer durch die Zentrierplatte 27, die Tellerfeder 26 und die Befestigungsbohrung 15 hindurch ragende Befestigungsschraube 28, welche mit Hilfe eines durch die Durchgangsbohrung 23 hindurch anzuordnenden Spannschlüssels derart verspannt wird, dass das Schiebestück 18 gegen den am Scherkopfhalter 10 angeordneten Scherkopf 12 mit dazwischenliegenden Gleitelement 20 gepresst und so auch definiert reibschlüssig drehfest mit der Motorwelle 5 verspannt wird.
Diese in den Darstellungen zum Ausführungsbeispiel gezeigte erfindungsgemäße Anordnung bewirkt in ihrem erfindungsgemäßen Zusammenwirken, dass bei den Bauformen von Rasenmähern mit einem Schnittkesseln und direkt mit der Motorwelle 5 starr verbundenen, d.h. direkt angetriebenen Messern 6, bei "Einschlag" eines Messers in einen ortsfesten Gegenstand, keine plastische Verformung der Motorwelle mehr auftritt, so dass die Unfallgefahr deutlich sinkt und Motorschäden vermieden werden.
Die erfindungsgemäße Anordnung ist fertigungstechnisch einfach und kostengünstig herstellbar.
All diese Vorteile werden dadurch bewirkt, dass selbst unter extremen Belastungen am Ende des Messers 6 keine plastischen Verformungen der Motorwelle 5 bei der erfindungsgemäßen Anordnung mehr auftreten können. Erfindungsgemäß wird dabei eine plastische Verformung der Motorwelle 5 unter extremen Belastungen wie folgt verhindert.
Die am Messer angreifende Extrembelastung bewirkt zunächst eine Biegeverformung der Motorwelle. Diese Biegeverformung wird jedoch nur im elastischen Bereich zugelassen, da sich der am Scherkopfhalter 10 angeordnete Anlaufring 11 noch im Bereich der elastischen Verformung bereits am Fangring 8 abstützt.
Der Fangring 8 überträgt nun die Belastung bis zu einer über das Material des Gleitelementes 20 und die Federhärte der Tellerfeder 26 einstellbaren Grenze über den Fangringträger 7 auf den Kesselboden 4 des Schnittkessels 2.
Wird nun diese vom Material des Gleitelementes 20 und der Federhärte der Tellerfeder 26 vorgegebene Haftreibungskraft überwunden, beginnt sich das Schiebestück 18 gegenüber dem Scherkopf 12 zu bewegen.
Da die im Schiebestück 18 angeordnete Schiebenut 16 in Kraftrichtung, d.h. senkrecht zur Längsausdehnung des Messers verläuft, und der am Scherkopf 12 angeordnete Zentrierzylinder 14 sich in der Nut nur verdrehen und/oder definiert in der Längsrichtung der Schiebenut 16 verlagern kann, werden nun die Scherbolzen 25 der erfindungsgemäß im Schiebestück 18 beidseitig der Schiebenut 16 fest verschraubten Scherschrauben 24, welche in die im Scherkopf 12 angeordneten Scherbohrungen 13 hineinragen definiert mit einer Scherkraft beaufschlagt.

Das Abscheren der Scherbolzen 25 ist dabei so bemessen, dass dieses bereits erfolgte noch bevor eine plastische Verformung des Kesselbodens 4 auftreten konnte.

Mit dem definierten Abscheren der Scherbolzen 25 löst die erfindungsgemäße Sicherheitskupplung aus und vermeidet so plastische Verfomungen am Kesselboden 4 und/oder an der Motorwelle 5.

Dabei bewirkt die erfindungsgemäße Anordnung in Ihrer Gesamtheit, dass das Messer 6 bei gebrochener Sollbruchstelle / ausgelöster Überlastsicherung sich weder von der Motorwelle 5 löst noch in die Seitenwände des Schnittkessels 2 einschlägt.

Auf Grund der definierten, erfindungsgemäßen Auslösemechanik können die Auslösekräfte, wie bereits erläutert, über die auslösende Scherkraft der Scherbolzen und den Gleitreibungskoeffizienten des jeweiligen Gleitelementes reproduzierbar eingestellt werden.

Auf Grund der erfindungsgemäßen Lösung ist zudem auch eine schnelle Instandsetzung vor Ort möglich.

Am Schnellsten geht es, wenn man eine zweite bereits vormontierte "Absorbereinheit" bestehend aus einem Schiebestück 18 mit einem bereits daran montiertem Messer 6, d.h. mit Tellerfeder 26, Zentrierplatte 27, Befestigungsschraube 28, Unterlegscheiben 32, Scherschrauben 24 sowie ein neues Gleitelement 20 am Mähort bereit hält.

Dann muss lediglich die "ausgelöste" Absorbereinheit mit den bei dieser abgebrochenen Scherbolzen 25 durch Lösen der Befestigungsschraube 28 abgeschraubt, die in den Scherbohrungen 13 steckenden Scherbolzen 25 ausgeschlagen und die bereits vormontierte Absorbereinheit mit intakten Scherschrauben 24 auf das neue Gleitelement 20 aufgesetzt und die Befestigungsschraube 28 wieder angezogen werden.

Auch bei nicht am Mähort bereitliegender Ersatz-"Absorbereinheit" ist kurzzeitig eine Reparatur vor Ort möglich.

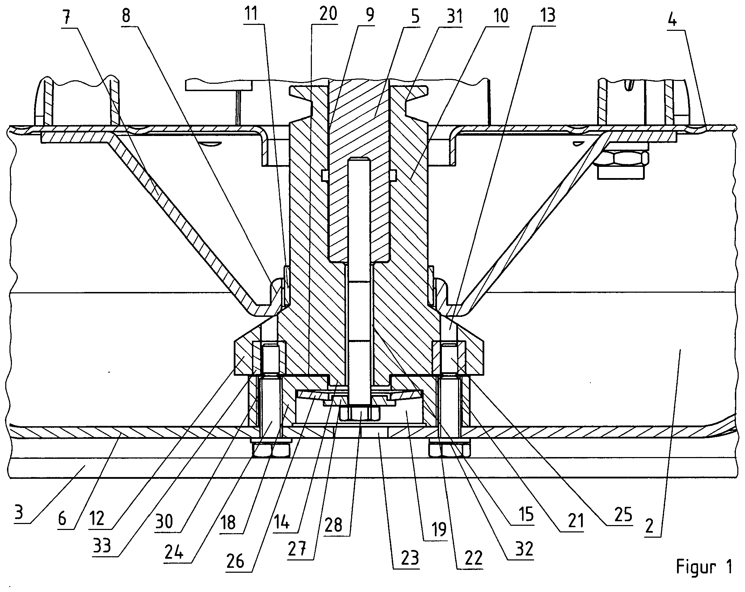

Man benötigt dann neben einem neuen Messer 6 und einem neuen Gleitelement 20 (aus Sicherheitsgründen sollte das Messer 6 und auch das Gleitelement 20 - selbst bei nicht sichtbaren Beschädigungen - nach solch einem Crash stets erneuert werden) lediglich noch zwei "neue" Scherschrauben 24 die man nach der bereits oben erläuterten Demontage des Schiebestückes 18 dann für die abgescherten Scherschrauben 24 einsetzt, wie bereits erläutert, die in den Scherbohrungen 13 steckenden Scherbolzen 25 herausschlägt um anschließend das reparierte Schiebestück 18 mit den erneuerten Scherschrauben 24 und dem neuen Messer 6 auf ein neues Gleitelement 20 aufzusetzen und die Befestigungsschraube 27, wie z.B. in Figur 1 dargestellt, in der Motorwelle 5 zu verspannen.

Diese Ausführungen zeigen, dass mit der erfindungsgemäßen Lösung die Ausfallzeiten deutlich gesenkt werden können, und dass zugleich auch die Ersatzteillagerhaltung und die Ersatzteilkosten deutlich minimiert werden, da neben dem aus Sicherheitsgründen auszutauschenden Messer 6 nur sehr kostengünstige Ersatzteile wie Scherschrauben 24 und Gleitelement 20 bereitgehalten und ersetzt werden müssen, so dass neben den Reparaturzeiten auch die Instandsetzungskosten deutlich sinken,

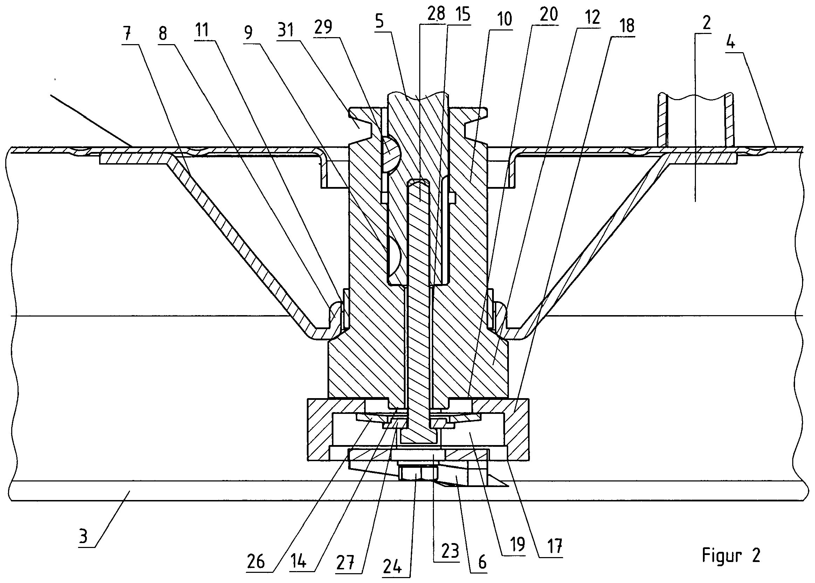

Vorteilhaft ist, dass wie in den Figuren 1 und 2 dargestellt, zwischen der Motorwelle 5 und dem Scherkopfhalter 10 im Bereich der Wellenbohrung 9 zur Drehmomentenübertragung Passfedern oder Keile 29 angeordnet sind.

Dadurch wird eine einfache, kostengünstige und betriebssichere Drehmomentenübertragung von der Motorwelle 5 auf den Scherkopfhalter 10 gewährleistet.

Erfindungsgemäß ist auch, wie im Ausführungsbeispiel dargestellt, dass der Anlaufring 11 als separates ringförmiges Bauteil auf dem Scherkopfhalter 10 angeordnet ist, und aus einem gegenüber dem Scherkopfhalter 10 verschleißfesteren Material besteht.

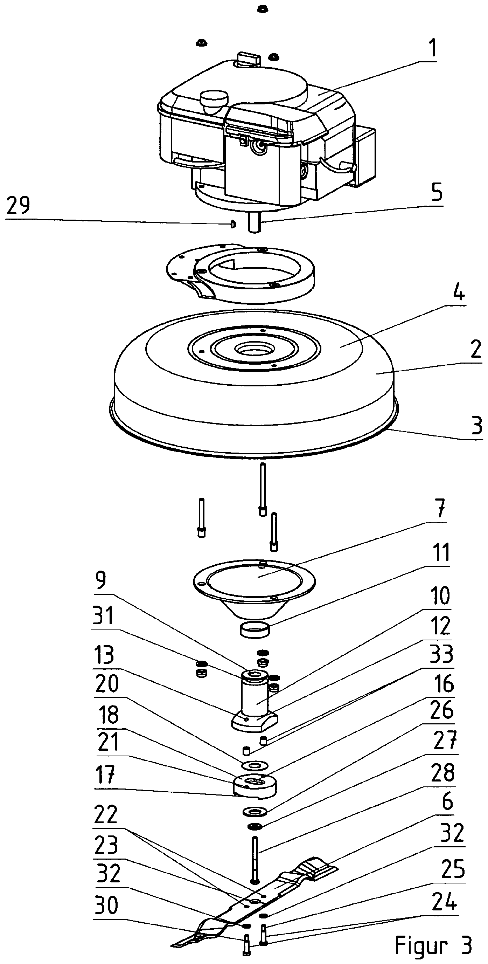

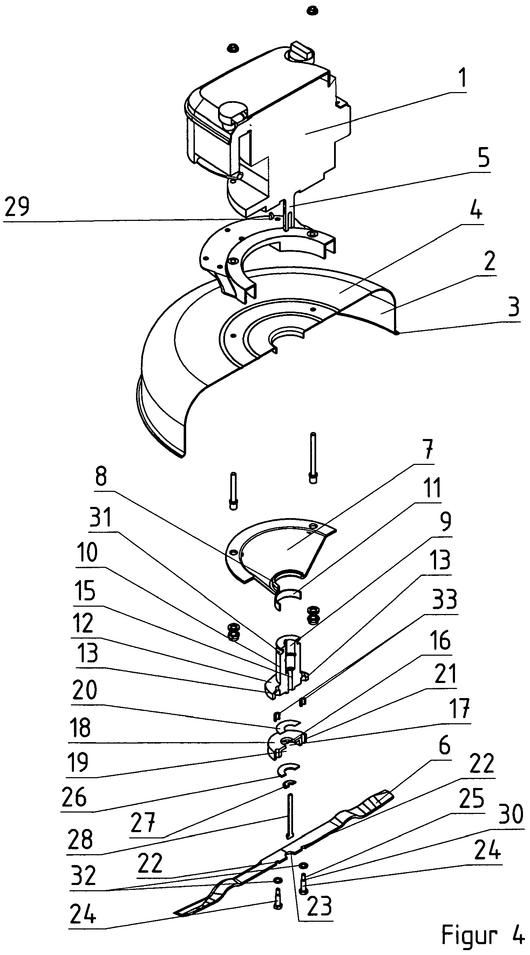

Erfindungsgemäß ist ebenfalls, wie in den Figuren 1, 3 und 4 dargestellt, dass die Scherbohrungen 13 von im Scherkopf 12 angeordneten Passhülsen (33) mit selbstschneidenden Außengewinde gebildet werden.

Durch beide vorgenannten Maßnahmen wird es möglich den Grundkörper des Scherkopfhalter 10 beispielsweise aus Aluminium, leicht, mit geringer Schwungmasse und zudem sehr kostengünstig herzustellen, um dann die aus verschleißfestem Material bestehende Verschleißteile am Grundkörper des Scherkopfhalters 10 zu montieren.

Erfindungswesentlich ist auch, dass Gleitelement 20 ein Anstrich, beispielsweise mit Silikon, ein in Öl oder Fett getränktes Papier, eine Kunststoffscheibe o.ä. ist, wodurch den jeweiligen Anforderungen optimal entsprochen werden kann.

Erfindungsgemäß kann an den Scherschrauben 24 zwischen dem Gewindebereich und dem den Gewindebereich überragenden Scherbolzen 25 eine Kerbnut 30 als Sollbruchstelle angeordnet sein, wodurch die Auslösekraft, d.h. der Auslösepunkt der Kupplung noch "präziser" eingestellt werden kann.
Erfindungsgemäß kann am Scherkopfhalter 10 eine Keilriemennut 31 angeordnet sein, welche mittels eines Keilriemens beispielsweise den Fahrantrieb des Rasenmähers ermöglicht.

### Bezugszeichenzusammenstellung

- 1: Motor
- 2: Schnittkessel
- 3: Kesselrand
- 4: Kesselboden
- 5: Motorwelle
- 6: Messer
- 7: Fangringträger
- 8: Fangring
- 9: Wellenbohrung
- 10: Scherkopfhalter
- 11: Anlaufring
- 12: Scherkopf
- 13: Scherbohrung
- 14: Zentrierzylinder
- 15: Befestigungsbohrung
- 16: Schiebenut
- 17: Messeraufnahmenut
- 18: Schiebestück
- 19: Federraum
- 20: Gleitelement
- 21: Gewindebohrung
- 22: Messerbefestigungsbohrung
- 23: Durchgangsbohrung
- 24: Scherschraube
- 25: Scherbolzen
- 26: Tellerfeder
- 27: Zentrierplatte
- 28: Befestigungsschraube
- 29: Keil
- 30: Kerbnut
- 31: Keilriemennut
- 32: Sicherungsring
- 33: Passhülse

## Patentansprüche

1. Sicherheitskupplung für einen Rasenmäher, welcher sichelartig arbeitet und von einem Motor (1) angetrieben wird, mit einem Schnittkessel (2) an dessen unteren, offenen Kesselrand (3), dem Kesselboden (4) gegenüberliegend, ein mit der Motorwelle (5) starr verbundenes, d.h. von der Motorwelle (5) direkt angetriebenes zwei- oder mehrflügeliges Messer (6) umläuft, **dadurch gekennzeichnet,**
- **dass** zentrisch zur Motorwelle (5) am Kesselboden (4), ein in den Schnittkessel (2) hineinragender Fangringträger (7) mit einem Fangring (8) angeordnet ist, und
- **dass** die Motorwelle (5) in einer Wellenbohrung (9) eines Scherkopfhalters (10) drehfest angeordnet ist, wobei der Scherkopfhalter (10) durch den Fangringträger (7) hindurch ragt und den Fangring (8) mit einem am Scherkopfhalters (10) angeordneten Scherkopf (12) überragt, wobei im Bereich des Fangringes (8) am Scherkopfhalter (10) ein Anlaufring (11) angeordnet ist, welcher bei im Betriebszustand rotierender Motorwelle (5) berührungslos, d.h. frei im Fangring (8) umläuft, und
- **dass** an dem unterhalb des Anlaufringes (11) am Scherkopfhalter (10) angeordneten Scherkopf (12) zwei einander diagonal gegenüberliegende durch den Scherkopf (12) hindurchgehende Scherbohrungen (13) angeordnet sind, wobei stirnseitig, mittig am Scherkopf (12) ein Zentrierzylinder (14) angeordnet ist, in dem mittig eine zentrisch in die Wellenbohrung (9) mündende, in der Achse der Motorwelle (5) liegende Befestigungsbohrung (15) angeordnet ist, und
- **dass** dem Scherkopf (12) des Scherkopfhalters (10) benachbart ein Schiebestück (18) angeordnet ist, welches scherkopfseitig mit einer mit dem Zentrierzylinder (14) in Wirkverbindung tretenden Schiebenut (16), und auf der gegenüberliegenden Seite mit einer rechwinklig zur Schiebenut (16) verlaufenden Messeraufnahmenut (17) versehen ist, wobei im Schiebestück (18), der Messeraufnahmenut (17) benachbart, ein zylinderförmiger Federraum (19) angeordnet ist, und
- **dass** das Schiebestück (18) entlang der Schiebenut (16) am Zentrierzylinder (14) des Scherkopfes (12) vom Scherkopfhalter (10) längsverschiebbar und verdrehbar angeordnet ist, und
- **dass** zwischen dem Schiebestück (18) und dem Scherkopf (12) des Scherkopfhalters (10) ein Gleitelement (20) angeordnet ist, und
- **dass** im Schiebestück (18) achssymmetrisch, beidseitig der Schiebenut (16), mittig zu deren Längsausdehnung, und in der radialen Lage zu den Scherbohrungen (13) im Scherkopf (12) fluchtend, Gewindebohrungen (21) angeordnet sind, welche gegenüber den Scherbohrungen (13) einen größeren Durchmesser aufweisen,
- **dass** mittig im Messer (6) eine Durchgangsbohrung (23), sowie symmetrisch beidseitig der Durchgangsbohrung (23), jeweils zu den Gewindebohrungen (21) und damit auch zu den Scherbohrungen (13) im Scherkopf (12) fluchtend, den Gewindebohrungen (21) zugeordnete Durchsteckbohrungen, die Messerbefestigungsbohrungen (22) angeordnet sind, und
- **dass** das Messer (6) formschlüssig in der Messeraufnahmenut (17) angeordnet ist, und mittels der in den Messerbefestigungsbohrungen (22) und den Gewindebohrungen (21) des Schiebestückes (18) verschraubten Scherschrauben (24) am Schiebestück (18) befestigt ist, und
- **dass** an den Scherschrauben (24) den Gewindebereich überragende Scherbolzen (25) derart angeordnet sind, dass diese bei am Schiebestück (18) verschraubten Scherschrauben (24) das Schiebestück (18) überragen, und
- **dass** die Schiebenut (16) des Schiebestückes (18) derart auf den Zentrierzylinder (14) des Scherkopfes (12) vom Scherkopfhalter (10) aufgesetzt wird, dass die das Schiebestück (18) überragenden, an den Scherschrauben (24) endseitig angeordneten Scherbolzen (25) in die Scherbohrungen (13) des Scherkopfhalters (10) hineinragen, wobei zwischen den Anlageflächen von Schiebestück (18) und Scherkopf (12) das Gleitelement (20) angeordnet ist, und
- **dass** im Federraum (19) des Schiebestückes (18) zwischen der Schiebenut (16) und dem mit dem Schiebestück (18) verbundenen Messer (6) eine im Bereich der Schiebenut (16) am Schiebestück (18) anliegende Tellerfeder (26) und dieser messerseitig benachbart eine Zentrierplatte (27) angeordnet ist, wobei mittels einer durch die Zentrierplatte (27), die Tellerfeder (26) und die Befestigungsbohrung (15) hindurchragende Befestigungsschraube (28) das Schiebestück (18) gegen den Scherkopfhalter (10) presst, und dabei alle vg. Bauteile drehfest mit der Motorwelle (5) verspannt wird.

2. Sicherheitskupplung für einen Rasenmäher nach Anspruch 1, **dadurch gekennzeichnet, dass** zwischen der Motorwelle (5) und dem Scherkopfhalter (10) im Bereich der Wellenbohrung (9) zur Drehmonentenübertragung Passfedern oder Keile (29) angeordnet sind.

3. Sicherheitskupplung für einen Rasenmäher nach Anspruch 1, **dadurch gekennzeichnet, dass** der Anlaufring (11) als separates ringförmiges Bauteil auf dem Scherkopfhalter (10) angeordnet ist.

4. Sicherheitskupplung für einen Rasenmäher nach Anspruch 1, **dadurch gekennzeichnet, dass** das Gleitelement (20) ein Anstrich, ein ölgetränktes Papier, eine Kunststoffscheibe o.ä. ist.

5. Sicherheitskupplung für einen Rasenmäher nach Anspruch 1, **dadurch gekennzeichnet, dass** die Scherbohrungen (13) von im Scherkopf (12) angeordneten Passhülsen (33) mit selbstschneidendem Außengewinde gebildet werden.

6. Sicherheitskupplung für einen Rasenmäher nach Anspruch 1, **dadurch gekennzeichnet, dass** an den Scherschrauben (24) zwischen dem Gewindebereich und dem den Gewindebereich überragenden Scherbolzen (25) eine Kerbnut (30) als Sollbruchstelle angeordnet ist.

7. Sicherheitskupplung für einen Rasenmäher nach Anspruch 1, **dadurch gekennzeichnet, dass** am Scherkopfhalter (10) eine Keilriemennut (31) angeordnet ist.

8. Sicherheitskupplung für einen Rasenmäher nach Anspruch 1, **dadurch gekennzeichnet, dass** zwischen jeder der Scherschrauben (24) und dem Messer (6) Sicherungsringe (32) angeordnet sind.

## Claims

1. Safety coupling for a lawnmower working with a scythe-like action and driven by a motor (1) with a cuttings bin (2) where a double or multi-vane rotating blade (6) is rigidly connected to the motor shaft (5) and is driven directly by the motor shaft (5) to rotate, in other words, at the lower open edge of the bin (3) opposite from the bin base (4) **characterized by** the fact
- that a capture ring support (7) projecting into the cuttings bin (2) is fitted with a capture ring (8) on the bin base (4) centrally to the motor shaft (5) and
- that the motor shaft (5) is arranged torque-free in a shaft hole (9) of a cutting head holder (10) whereby the cutting head holder (10) protrudes through the capture ring support (7) and projects over the capture ring (8) with a cutting head (12) arranged at the cutting head holder (10), whereby a thrust ring (11) is arranged in the region of the capture ring (8) at the cutting head holder (10) which turns contactlessly in the capture ring (8) with the motor shaft (5) as it rotates in the operational state, and
- that two cutter holes (13) lying diagonally opposite to each other and protruding through the cutting head (12) are arranged at the cutting head (12) located at the cuting head holder (10) below the thrust ring (11) whereby a centering cylinder (14) is arranged on the front side in the middle of the cutting head (12) where a fastening hole (15) opens out centrally into the shaft hole (9) in the middle of the motor shaft (5), and
- that a slider (18) is arranged adjacently to the cutting head (12) of the cutting head holder (10) which is provided on the cutting head side with a sliding slot (16) forming a working connection with the centering cylinder (14) and on the opposite side with a blade mounting slot (17) at a right angle to the sliding slot (16) whereby a cylindrically shaped spring compartment (19) is arranged adjacent to the slider (18) of the blade mounting slot (17), and
- that the slider (18) is arranged so that it can be moved longitudinally and turned by the cutting head holder (10) along the sliding slot (16) at the centering cylinder (14) of the cutting head (12), and
- that a sliding element (20) is arranged between the slider (18) and the cutting head (12) of the cutting head holder (10), and
- that threaded holes (21) are arranged in the slider (18) symmetrically to the axis on both sides of the sliding slot (16) centrally to their length expansion and flush with the cutter holes (13) in the cutting head (12) in the radial position which have a larger diameter compared to the cutter holes (13), and
- that a clearance hole (23) is arranged centrally in the blade (6) and the blade fastening holes (22) are also arranged symmetrically on both sides of the clearance hole (23) to be flush with the threaded holes (21) and also with the cutter holes (13) in the cutting head (12) respectively and with the clearance hole assigned to the threaded holes (21), and
- that the blade (6) is arranged so that it locks positively into the blade mounting slot (17) and is fastened to the slider (18) by using a screwed shear bolts (24) in the blade fastening holes (22) and the threaded holes (21) of the slider (18), and
- that cutter bolts (25) protruding into the threaded region at the shear bolts (24) are arranged in such a way that they protrude over the slider (18) at the shear bolts (24) screwed at the slider (18), and
- that the sliding slot (16) of the slider (18) is positioned by the cutting head holder (10) on the centering cylinder (14) of the cutting head (12) in such a way that the cutter bolts (25) sticking out above the slider (18) are arranged on the end side of the shear bolts (24) to fit into the cutter holes (13) of the cutting head holder (10), whereby the sliding element (20) is arranged between the contact surfaces of the slider (18) and the cutting head (12), and
- that a flat spring (26) is arranged at the slider (18) in the region of the sliding slot (16) in the spring compartment (19) of the slider (18) between the sliding slot (16) and the blade (6) connected to the slider (18) with an adjacent centering plate (27) on the plate side, whereby the slider (18) presses against the cutting head holder (10) by using a fastening screw (28) protruding through the centering plate (27), the flat spring (26) and the fastening hole (15) so that all the previously described components are clamped together with the motor shaft (5).

2. Safety coupling for a lawnmower according to claim 1, **characterized by** the fact that feathered keys or wedges (29) are arranged between the motor shaft (5) and the cutting head holder (10) in the region of the shaft hole (9) to transfer torque.

3. Safety coupling for a lawnmower according to claim 1, **characterized by** the fact that the thrust ring (11) is arranged on the cutting head holder (10) as a separate ring-shaped component.

4. Safety coupling for a lawnmower according to claim 1, **characterized by** the fact that the sliding element (20) is a coat of paint, an oil-impregnated paper, a plastic disk or similar item.

5. Safety coupling for a lawnmower according to claim 1, **characterized by** the fact that the cutter holes (13) of the adapter sleeves (33) in the cutting head (12) are formed with self-tapping exterior threads.

6. Safety coupling for a lawnmower according to claim 1, **characterized by** the fact that a notched groove (30) is arranged as a predetermined breaking point at the shear bolts (24) between the threaded region and the cutter bolts (25) projecting over the threaded region.

7. Safety coupling for a lawnmower according to claim 1, **characterized by** the fact that a V belt channel (31) is arranged at the cutting head holder (10).

8. Safety coupling for a lawnmower according to claim 1, **characterized by** the fact that securing rings (32) are arranged between each shear bolt (24) and the blade (6).

## Revendications

1. Embrayage de sécurité pour une tondeuse à gazon fonctionnant à la manière d'une faucille et étant entraîné par un moteur (1), avec un réservoir de tonte (2) et avec une lame (6) à deux ou plusieurs pales circulant au rebord de réservoir (3) inférieur et ouvert et se trouvant en face du fond de réservoir (4), cette lame (6) étant reliée de manière rigide à l'arbre de moteur (5), c'est-à-dire directement entraînée par l'arbre de moteur (5), **caractérisé par le fait**
- **que**, centré par rapport à l'arbre de moteur (5) sur le fond de réservoir (4), un support de bague d'arrêt (7) s'étendant dans le réservoir de tonte (2) et pourvu d'une bague d'arrêt (8) est disposé, et
- **que** l'arbre de moteur (5) est disposé de manière fixe quant à la rotation dans un perçage d'arbre (9) d'un support de tête de coupe (10), le support de tête de coupe (10) s'étendant au travers du support de bague d'arrêt (7) et surmontant la bague d'arrêt (8) avec une tête de coupe (12) disposée sur le support de tête de coupe (10), une bague de roulement (11) étant disposée dans la zone de la bague d'arrêt (8) sur le support de tête de coupe (10), laquelle bague de roulement (11) étant sans contact lors de la rotation d'arbre de moteur (5) pendant le fonctionnement, c'est-à-dire qu'elle circule librement dans la bague d'arrêt (8), et
- **que**, sur la tête de coupe (12) disposée sous la bague de roulement (11) sur le support de tête de coupe (10), deux perçages de coupe (13) sont disposés face à face en diagonale et traversant la tête de coupe (12), un cylindre de centrage (14) étant disposé de manière frontale, au centre sur la tête de coupe (12), dans lequel cylindre de centrage (14) est disposé au milieu un perçage de fixation (15) débouchant de manière centrale dans le perçage d'arbre (9) et situé dans l'axe de l'arbre de moteur (5), et
- **qu'**une pièce coulissante (18) est disposée au voisinage de la tête de coupe (12) du support de tête de coupe (10), laquelle pièce coulissante (18) possède du côté de la tête de coupe (12) une gorge de coulissement (16) entrant en liaison active avec le cylindre de centrage (14), et étant équipée sur le côté opposé d'une gorge de logement de lame (17) perpendiculaire à la gorge de coulissement (16), un espace à ressort (19) de forme cylindrique étant disposé dans la pièce coulissante (18) au voisinage de la gorge de logement de lame (17), et
- **que** la pièce coulissante (18) est disposée de manière rotative et mobile en direction longitudinale le long de la gorge de coulissement (16) sur le cylindre de centrage (14) de la tête de coupe (12) du support de tête de coupe (10), et
- **qu'**un coulisseau (20) est disposé entre la pièce coulissante (18) et la tête de coupe (12) du support de tête de coupe (10), et
- **que** des perçages filetés (21) sont disposés dans la pièce coulissante (18) symétriquement par rapport à l'axe, des deux côtés de la gorge de coulissement (16), au centre par rapport à son extension longitudinale, et alignés en position radiale avec les perçages de coupe (13) dans la tête de coupe (12), lesquels perçages filetés (21) présentant un diamètre plus important par rapport aux perçages de coupe (13), et
- **que**, au centre dans la lame (6) sont disposés un perçage de passage (23) ainsi des perçages traversant attribués aux perçages filetés (21), les perçages de fixation de lame (22), placés de manière symétrique des deux côtés du perçage de passage (23) resp. alignés avec les perçages filetés (21) ainsi donc également avec les perçages de coupe (13) dans la tête de coupe (12), et
- **que** la lame (6) est disposée dans la gorge de logement de lame (17) en épousant parfaitement la forme, et qu'elle est fixée sur la pièce coulissante (18) au moyen des vis de coupe (24) vissées dans les perçages de fixation de lame (22) et dans les perçages filetés (21) de la pièce coulissante (18), et
- **que**, sur les vis de coupe (24), des boulons de coupe (25) dépassant dans la zone de filetage sont disposés de telle manière que ceux-ci dépassent la pièce coulissante (18) avec les vis de coupe (24) vissées sur la pièce coulissante (18), et
- **que** la gorge de coulissement (16) de la pièce coulissante (18) est placée sur le cylindre de centrage (14) de la tête de coupe (12) du support de tête de coupe (10) de telle manière que les boulons de coupe (25) dépassant la pièce coulissante (18) et disposés aux extrémités sur les vis de coupe (24) s'étendent dans les perçages de coupe (13) du support de tête de coupe (10), le coulisseau (20) étant disposé entre les surfaces de contact de la pièce coulissante (18) et de la tête de coupe (12), et
- **que**, dans l'espace à ressort (19) de la pièce coulissante (18), entre la gorge de coulissement (16) et la lame (6) reliée à la pièce coulissante (18), une rondelle-ressort (26) disposée dans la zone de gorge de coulissement (16) sur la pièce coulissante (18) et une plaque de centrage (27) du côté de la lame et avoisinant la rondelle-ressort (26) sont disposées, la pièce coulissante (18) pressant contre le support de tête de coupe (10) au moyen d'une vis de fixation (28) traversant la plaque de centrage (27), la rondelle-ressort (26) et le perçage de fixation (15), toutes les pièces précédentes étant ainsi serrées avec l'arbre de moteur (5) de manière fixe quant à la rotation.

2. Embrayage de sécurité pour une tondeuse à gazon selon l'exigence 1 **caractérisé par le fait que**, entre l'arbre de moteur (5) et le support de tête de coupe (10), des clavettes ou cales (29) sont disposées dans la zone du perçage d'arbre (9) afin de permettre la transmission du couple.

3. Embrayage de sécurité pour une tondeuse à gazon selon l'exigence 1 **caractérisé par le fait que** la bague de roulement (11) est disposée comme pièce séparée de forme annulaire sur le support de tête de coupe (10).

4. Embrayage de sécurité pour une tondeuse à gazon selon l'exigence 1 **caractérisé par le fait que** le coulisseau (20) est constitué d'une couche de peinture, d'un papier imbibé d'huile, d'une rondelle en plastique, ou de tout autre élément similaire.

5. Embrayage de sécurité pour une tondeuse à gazon selon l'exigence 1 **caractérisé par le fait que** les perçages de coupe (13) des douilles d'ajustement (33) disposées dans la tête de coupe (12) sont formés par des filetages extérieurs autocoupants.

6. Embrayage de sécurité pour une tondeuse à gazon selon l'exigence 1 **caractérisé par le fait qu'**une gorge d'entaille (30) est disposée comme point de rupture de consigne sur les vis de coupe (24) entre la zone de filetage et le boulon de coupe (25) dépassant de la zone de filetage.

7. Embrayage de sécurité pour une tondeuse à gazon selon l'exigence 1 **caractérisé par le fait qu'**une gorge pour courroie trapézoïdale (31) est disposée sur le support de tête de coupe (10).

8. Embrayage de sécurité pour une tondeuse à gazon selon l'exigence 1 **caractérisé par le fait que** des bagues de sécurité (32) sont disposées entre chacune des vis de coupe (24) et la lame (6).
